**Europäisches Patentamt**

**European Patent Office**

**Office européen des brevets**

(11) Numéro de publication : **0 487 437 A1**

(12) # DEMANDE DE BREVET EUROPEEN

(21) Numéro de dépôt : **91440086.6**

(22) Date de dépôt : **04.11.91**

(51) Int. Cl.⁵ : **A23N 15/00**

(30) Priorité : **19.11.90 FR 9014598**

(43) Date de publication de la demande :
**27.05.92 Bulletin 92/22**

(84) Etats contractants désignés :
**AT BE CH DE DK ES GB GR IT LI LU NL SE**

(71) Demandeur : **UNION DES COOPERATIVES
AGRICOLES DE CEREALES DE SEMENCES
DE LA VALLEE DU RHONE
F-26160 la Batie Rolland (FR)**

(72) Inventeur : **Roman, Georges
45 Rue du Parc
F-84240 La Tour d'Aigues (FR)**
Inventeur : **Relave, Fabien
Place du Valladas
F-26780 Chateauneuf du Rhône (FR)**

(74) Mandataire : **Arbousse-Bastide, Jean-Claude
Philippe
Cabinet Maisonnier 28 rue Servient
F-69003 Lyon (FR)**

(54) **Dispositif pour l'égoussage des bulbes végétaux.**

(57) Dispositif d'égoussage, notamment des bulbes végétaux, composé d'une chaîne élévatrice à godets (14), d'un réceptacle d'égoussage (2) et d'une bande transporteuse (34).

Le réceptacle d'égoussage (2), qui reçoit les bulbes (12) un à un, comprend un fond horizontal constituant une trappe amovible (28), un disque vertical (21) entraîné en rotation continue et une paroi verticale (23) disposée en regard du disque (21), mobile en translation horizontale, fixée d'une part à l'extrémité d'un vérin horizontal (24) maintenu sous pression constante et d'autre part à l'extrémité d'au moins une tige (25) horizontale parallèle audit vérin (24), solidaire d'un galet (29), lequel vient en appui sur un excentrique (30) entraîné par un arbre (31), la vitesse de rotation de ce dernier permettant d'appliquer sur la paroi (23), au moyen du vérin (24), une pression constante d'une durée déterminée.

Fig 1

La présente invention a pour objet un dispositif pour l'égoussage des bulbes végétaux, permettant l'élimination des enveloppes telles que peaux, racines, plateaux racinaires, et la séparation des caïeux.

L'égoussage des bulbes s'effectue actuellement de plusieurs manières, et manuellement, semi-automatiquement ou automatiquement.

L'égoussage manuel présente l'avantage d'un travail soigné, c'est-à-dire n'occasionnant pas aux caïeux de chocs ou blessures susceptibles de servir de voie d'entrée aux maladies fongiques. Toutefois c'est un travail long et pénible, présentant l'inconvénient du manque de rentabilité.

Dans l'égoussaage semi-automatique, les bulbes sont positionnés manuellement puis un poinçon casse le plateau racinaire, les caieux étant séparés par des doigts en caoutchouc.

L'égoussage automatique des bulbes est réalisé par forçage entre deux éléments en mouvement, soit deux disques en rotation autour de deux axes non parallèles, soit d'une part un rouleau recouvert de brosses et d'autre part une contre brosse.

Ces dispositifs mécaniques présentent toutefois l'inconvénient de procéder à un égoussage forcé en une étape, trop souvent agressif et occasionnant des traumatismes aux caieux.

La présente invention permet de remédier à ces inconvénients en proposant un dispositif permettant l'égoussage des bulbes un à un, sans positionnement manuel, de façon progressive et adaptée à chaque bulbe, quel que soit son calibre.

Le dispositif d'égoussage selon l'invention comporte une trémie, un ou plusieurs modules d'égoussage permettant chacun l'égoussage complet d'un bulbe à la fois, et un ou plusieurs tapis de convoyage des produits égoussés.

Un module d'égoussage se compose d'une chaine ou courroie élévatrice à godets prenant en charge, à la sortie de la trémie, les bulbes un à un pour les déposer par gravité dans un réceptacle d'égoussage, lequel comporte quatre parois verticales et un fond.

Conformément à l'invention, l'une des parois verticales du réceptacle d'égoussage est constituée d'un disque en rotation continue, la paroi opposée étant mobile en translation horizontale, étant fixée à l'extrémité d'un piston permettant à ladite paroi mobile d'appliquer sur le bulbe enfermé dans le réceptacle d'égoussage une pression réglable intermittente. Les deux autres parois sont fixes.

Le fond du réceptacle d'égoussage constitue une trappe amovible, s'ouvrant à la fin de l'égoussage pour laisser échapper par gravité le produit de l'opération sur une bande de transfert.

Lorsque le bulbe à égousser est dans le réceptacle, le piston comprime, pendant un laps de temps déterminé et assez bref, ledit bulbe contre le disque en rotation continue, celui-ci étant positionné de manière que la vitesse linéaire de rotation au point central de pression sur le bulbe soit quasiment nulle. La rotation du disque provoque le détachement des enveloppes, le fractionnement du bulbe et la dissociation des caieux.

Le piston continue sa course pendant le laps de temps préétabli, et s'il ne rencontre pas de résistance il atteint une cote prédéterminée qui déclenche l'ouverture de la trappe.

Dans le cas où le piston rencontre une résistance, c'est-à-dire lorsque le bulbe ne se fractionne pas suffisamment, il n'atteint pas la cote d'ouverture de la trappe et se rétracte pour recommencer un cycle de compression du bulbe.

La pression appliquée sur le bulbe, constante, peut être règlée par vérin hydraulique ou pneumatique, ou à l'aide d'un ressort.

Pour éviter de blesser les caieux et améliorer l'adhérence, le disque, la paroi mobile, la trappe, et les parois fixes, qui sont en métal, sont recouverts d'un revêtement souple lui-même recouvert d'un revêtement anti-usure.

Les caractéristiques et les avantages de la présente invention ressortiront plus clairement de la description qui suit et qui se rapporte au dessin annexé, lequel en présente un mode de réalisation non limitatif.

Dans le dessin annexé :
– la figure 1 représente une vue en coupe transversale d'un module d'égoussage d'un dispositif selon l'invention.
– la figure 2 représente une vue en coupe à plus grande échelle du réceptacle d'un module d'égoussage.

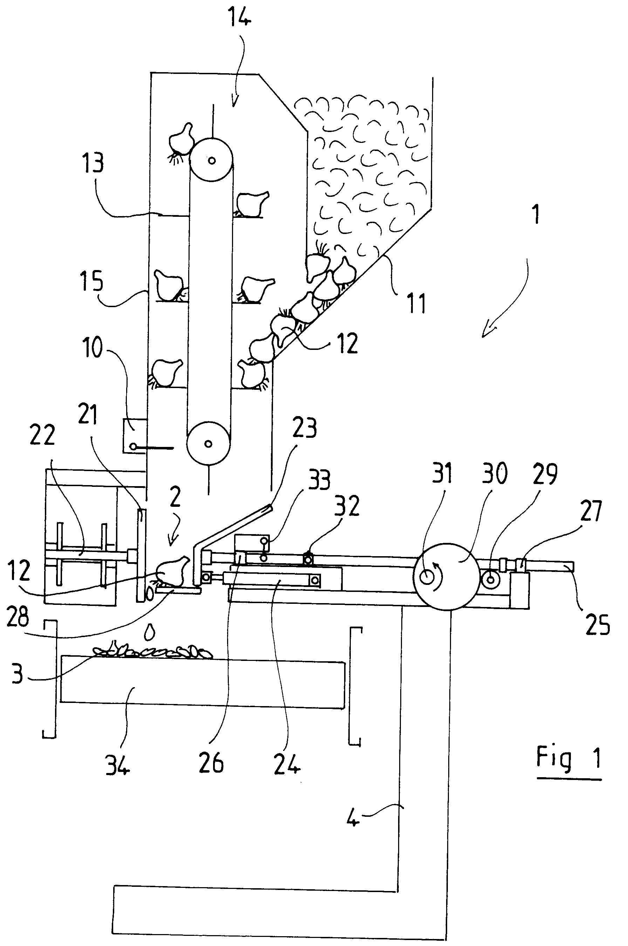

Si on se réfère à la figure 1 on peut voir que le module d'égoussage 1 comporte une trémie 11 déversant les bulbes 12 dans les godets 13 d'une chaine transporteuse élévatrice 14 disposée dans un carter 15, les godets 13 réceptionnant les bulbes 12 un à un.

En dessous de la chaine transporteuse 14 se trouve un réceptacle d'égoussage 2 constitué d'une part d'un disque vertical 21 entraîné en rotation continue par un arbre 22 lui-même relié à un dispositif moteur, d'autre part d'une paroi verticale 23 en regard du disque 21, mobile horizontalement, de deux parois fixes (non visibles sur la figure), et enfin d'un fond horizontal constitué d'une trappe amovible 28.

La paroi mobile 23 est fixée d'une part à l'extrémité d'un vérin horizontal 24 et d'autre part à l'extrémité de deux tiges 25 horizontales, parallèles audit vérin 24, coulissant dans deux guides 26 et 27, et solidaires d'un galet 29 venant en appui sur un excentrique 30 entraîné par un arbre 31.

L'excentrique 30 en tournant repousse de façon intermittente le galet 29, opérant le retrait des tiges 25, donc de la paroi 23, laquelle comprime le vérin 24, ce qui a pour effet de relâcher la pression sur le bulbe 12. Le vérin 24, maintenu sous pression constante, commande ensuite le déplacement en sens inverse de la paroi mobile 23, laquelle applique cette pression sur le bulbe 12, la durée d'application de cette pression étant déterminée par la vitesse de rotation de l'arbre 31.

La tige coulissante 25 est munie d'une butée réglable 32 positionnée convenablement par rapport au vérin 24 de manière à déclencher, lorsque le vérin 24 est en fin de course, l'ouverture de la trappe 28, par l'intermédiaire d'un interrupteur 33.

Si la butée 32 n'atteint pas l'interrupteur 33 dans le temps prédéterminé, c'est-à-dire avant que le galet 29 ne soit entraîné en rotation par l'excentrique 30, la trappe 28 ne s'ouvre pas, la paroi 23 est déplacée en retrait puis ramenée pour un nouveau cycle de compression avec le même bulbe non dissocié.

Sous la trappe 28 défile une bande de transfert 34 sur laquelle tombent les caïeux et les enveloppes qui seront séparées dans une opération ultérieure.

Un interrupteur 10 placé entre la chaine transporteuse 14 et le réceptacle 2 stoppe ladite chaine 14 lorsqu'un bulbe 12 tombe dans le réceptacle 2, le mouvement de la chaine 14 reprenant à la fermeture de la trappe 28, étant commandé également par l'interrupteur 33.

L'ensemble du module d'égoussage 1 et de la trémie 11 sont fixés sur un socle 4.

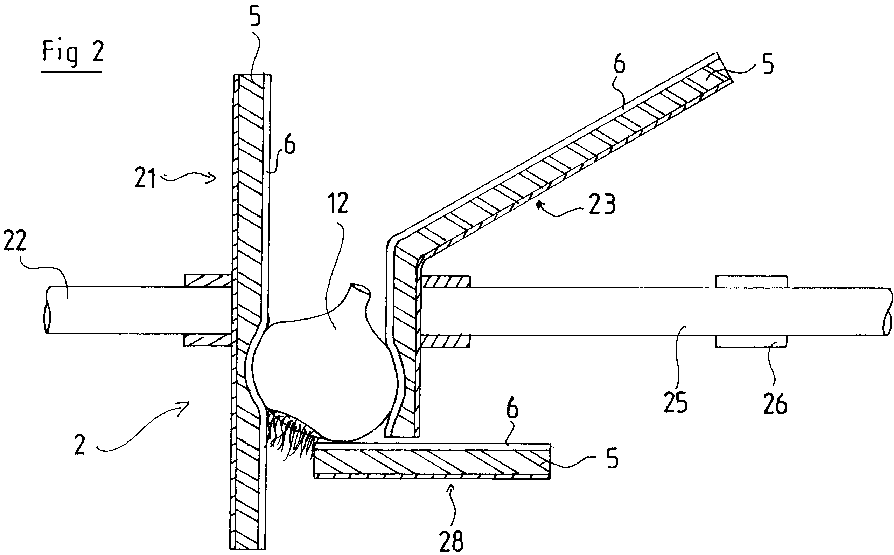

Si on se réfère ensuite à la figure 2 on peut voir que les éléments du réceptacle 2 entrant en contact avec le bulbe 12, à savoir le disque 21, la paroi 23, la trappe 28 et les deux autres parois (non visibles sur la figure) sont recouverts d'abord d'un revêtement souple 5 puis d'un revêtement anti-usure 6, permettant de ne pas endommager le bulbe 12.

Il va de soi que la présente invention ne saurait être limitée à la description qui précède d'un de ses modes de réalisation, susceptible de subir un certain nombre de modifications sans pour autant sortir du cadre de l'invention. Notamment la paroi mobile disposée en regard du disque peut présenter n'importe quelle forme géométrique, et en particulier celle d'un disque.

## Revendications

1) Dispositif d'égoussage, notamment des bulbes végétaux, composé d'une chaîne élévatrice à godets (14), d'un réceptacle d'égoussage (2) et d'une bande transporteuse (34), caractérisé en ce que le réceptacle d'égoussage (2), qui reçoit les bulbes (12) un à un, comprend un fond horizontal constituant une trappe amovible (28), un disque vertical (21) entraîné en rotation continue et une paroi verticale (23) disposée en regard du disque (21), mobile en translation horizontale et à laquelle est appliquée, de façon intermittente, une pression constante, permettant un égoussage progressif de chaque bulbe jusqu'à égoussage complet.

2) Dispositif selon la revendication 1 caractérisé en ce que la paroi verticale (23) mobile horizontalement est fixée d'une part à l'extrémité d'un vérin horizontal (24) maintenu sous pression constante et d'autre part à l'extrémité d'au moins une tige (25) horizontale parallèle audit vérin (24), solidaire d'un galet (29), lequel vient en appui sur un excentrique (30) entraîné par un arbre (31), la vitesse de rotation de ce dernier permettant d'appliquer sur la paroi (23), au moyen du vérin (24), une pression constante d'une durée déterminée.

3) Dispositif selon la revendication 1 ou la revendication 2, caractérisé en ce que la tige coulissante (25) est munie d'une butée réglable (32) positionnée par rapport au vérin (24) de manière à déclencher, lorsque le vérin (24) est en fin de course, l'ouverture de la trappe (28), par l'intermédiaire d'un interrupteur (33) ; et en ce que, si la butée (32) n'atteint pas l'interrupteur (33) avant que l'excentrique (30) opère le retrait de la paroi (23), la trappe (28) ne s'ouvre pas et le vérin (24) ramène la paroi (23) pour un nouveau cycle de compression du bulbe (12).

4) Dispositif selon la revendication 1 caractérisé en ce qu'un interrupteur (10) est placé entre la chaîne élévatrice (14) et le réceptacle (2), stoppant ladite chaîne (14) lorsqu'un bulbe (12) tombe dans le réceptacle (2), le mouvement de ladite chaîne (14) reprenant à la fermeture de la trappe (28), étant commandé par l'interrupteur (33).

5) Dispositif selon la revendication 1 caractérisé en ce que les éléments du réceptacle (2), à savoir le disque vertical (21), la paroi verticale (23), les deux autres parois et la trappe amovible (28) sont recouverts, d'abord d'un revêtement souple (5), puis d'un revêtement anti-usure (6).

Fig 1

Fig 2

EP 0 487 437 A1

**European Patent Office**

# EUROPEAN SEARCH REPORT

Application Number

EP 91 44 0086

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 641 677 (AUBERT & CIE S.A.R.L.) <br> * page 4, line 6 – page 8, line 10 * <br> --- | 1 | A23N15/00 |
| A | FR-A-2 639 194 (SNC SOBAGRI) <br> --- | | |
| A | EP-A-0 153 244 (AUBERT-MAGUERO) <br> --- | | |
| A | SU-A-1 398 799 (MOLD IRRIGATION HOR) <br> --- | | |
| A | SU-A-888 922 (KIEV SOYUZSORTSEMOV) <br> --- | | |
| A | SU-A-1 324 631 (MOLD FARM IRRIG) <br> ----- | | |
| | | | TECHNICAL FIELDS SEARCHED (Int. Cl.5) <br><br> A23N |

The present search report has been drawn up for all claims

| Place of search | Date of completion of the search | Examiner |
|---|---|---|
| THE HAGUE | 26 FEBRUARY 1992 | Oorschot J. van |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)